Europäisches Patentamt

European Patent Office

Office européen des brevets

(19)

(11) **EP 1 282 248 A1**

(12) ## EUROPEAN PATENT APPLICATION

(43) Date of publication:
**05.02.2003 Bulletin 2003/06**

(51) Int Cl.$^7$: **H04J 3/06**

(21) Application number: **01306494.4**

(22) Date of filing: **30.07.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **LUCENT TECHNOLOGIES INC.**
**Murray Hill, New Jersey 07974-0636 (US)**

(72) Inventors:
• **Baum, Stefan**
  **Erlangen, Bavaria 91058 (DE)**

• **Bleisteiner, Bernd Markus K.**
  **Fuerth 90765 (DE)**
• **Dohmen, Ralf**
  **Nurenberg, Bayern (DE)**
• **Wallerer, Edwin**
  **Allersberg, Bavaria 90584 (DE)**

(74) Representative: **Sarup, David Alexander et al
Lucent Technologies NS UK Limted,
5 Mornington Road
Woodford Green, Essex IG8 OTU (GB)**

(54) **Programmable frame alignment signal**

(57)     The invention relates to the transmission of data embedded in at least one carrier signal having a frame based structure with a section (2) defined for embedding synchronization information (3) for detecting a predetermined frame based point of reference.

An object of the invention is to provide a new and considerably improved approach for using transmission framing pattern in independent of any pre-given standardization.

Accordingly, for the transmission of data embedded in a carrier signal having a frame based structure with a section defined for embedding synchronization information for detecting a predetermined frame based point of reference, the invention proposes to use instead of fixed synchronization information (3) flexible synchronization information (3'), in particular programmable synchronization information (3').

FIG. 2

EP 1 282 248 A1

## Description

The invention relates to a method, a transmissions system and an implementation software for the transmission of data embedded in at least one carrier signal having a frame based structure with a section defined for embedding synchronization information for detecting a predetermined frame based point of reference.

Conventionally frame-based or frame-oriented data transmission uses at least one carrier signal comprising a frame structure based on at least one transmission basic frame. The structure includes predefined sections or areas for embedding payload data to be transmitted according to a defined framing pattern and sections or areas for embedding corresponding framing information and information for other operational functions, such as for example maintenance and performance monitoring.

For example, in optical transmission systems a frame based data transmission usually uses as framing information a synchronization marker in order to ensure, in particular at the receiver the functionality of detecting the used framing pattern and especially the beginning of a respective frame. Such synchronization marker usually is called frame alignment signal (FAS), frame alignment word (FAW) or frame alignment pattern (FAP).

According to existing standards, sections or areas where such synchronization markers are embedded or located are called the overhead sections of the respective transmission frame structure and normally is added by means of a respective adapted transmitter before the respective sections for the payload data. As known by a person skilled in the art, the frame alignment word is a specific binary pattern that contains sufficient "0" to "1" and/or "1" to "0" transitions such as for example the SONET/SDH frame alignment word "#F6F62828" as specified in the standards ITU-T G.783 and Telcordia GR-253, whose entire disclosure, in particular concerning the specific binary pattern of such frame alignment signals is hereby made part of the subject-matter of the disclosure of the present description.

In combination with a corresponding synchronization algorithm the receiver may detect the frame alignment signal and synchronize the data stream, i.e. is detecting the boundary of the respective transmission frame and aligning the internal or embedded data to a data stream adapted for the further data processing. As the synchronization by means of the synchronization algorithm is obtained at the receiver the further data processing can be performed.

Currently used transmission systems however, such as optical transmission systems utilize standardized transmission framing pattern and hence fixed frame alignment words with respective defined and standardized synchronization algorithms.

However, the standardized framing pattern using fixed frame alignment words results in a lack of flexibility for the frame alignment algorithms. Standardized framing algorithms work on specific bit error rates (BER) for example on a BER of maximal $10^{-3}$. However such specific bit error rates usually are based on systems which do not use error correction mechanisms. In contrast thereto, future or even currently used data transmission systems more and more are equipped additionally with error correction mechanisms leading to the functionality of dealing with deteriorated or higher bit error rates, such as for example up to a bit error rate of $10^{-2}$. Accordingly, for such applications new and improved frame alignment algorithms using respective new or different kinds of transmission framing pattern are desired or even needed as the probability of loosing synchronization due to bit errors will be higher.

Based on the currently approach of standardized transmission framing pattern however, this would cause additional definitions of new specific framing pattern and may result in the necessity for costly adaptations, especially of the hardware for different specific applications. Moreover, every additional definition or standard may cause further matching of different frame structures to one another, wherein conversions usually require a high level of processing complexity and hence are linked to high costs, too.

One object of the invention is therefore to provide with regard to the prior art a new and considerably improved approach for using transmission framing pattern in a flexible way, in particular independent of any pre-given standardization resulting in the currently fixed framing pattern thereof.

The object is achieved by the inventive solution characterized by a method having the features of claim 1, by a data transmission system having the features of claim 7 and by an implementation software having the features of claim 16, respectively.

Advantage and/or preferred refinements or developments are the subject matter of the respective dependent claims.

Accordingly, for the transmission of data embedded in a carrier signal having a frame based structure with a section defined for embedding synchronization information for detecting a predetermined frame based point of reference, the invention proposes to use such a section for a flexible synchronization information.

One of the main advantages resulting therefrom is that the synchronization information and hence the framing pattern can be adapted to the requirements of a framing under different and/or preferably higher bit error rates, which in particular in future will be more and more increased in comparison to current standardized bit error rates. Additionally non standardized synchronization information can be used additionally to support a plurality of different frame alignment algorithms providing an enhanced flexibility of user and/or operator specific applications.

According to very preferred refinements of the invention, the synchronization information to be embedded is adapted to be programmable leading to the advantage that the flexibility of the framing pattern with regard to specific requirements of system devices using such framing pattern is further increased.

Practically, a system is used that comprises at least a transmitter having means for embedding the data stream according to selectable synchronization information and/or at least a receiver having means for detecting and/or aligning a transmitted or received data stream based on selectable synchronization information. Preferably these means are at least partially formed by an integrated circuit, especially by an application specific integrated circuit. For generating flexible synchronization information, preferably a processor means, in particular a microprocessor means is proposed that is adapted to be programmable, for example by an operator.

With such a transmission system the frame alignment is not fixedly based on one predetermined framing pattern but instead may be adapted application specific using flexible framing pattern at the transmitter and/or receiver. Accordingly individual, proprietary and/ or non standardized framing pattern and algorithms can be supported by a given transmitter and/or receiver which accordingly will not be useless in case the standardize framing pattern change but will be operable independent of any standardizes framing pattern. By use of programmable processor means a desired and selectable frame aligning can be realized on a very easy way.

Furthermore by the provision of memory means a desired frame alignment pattern to be used for the data transmission and/or an expected frame alignment pattern may be stored and have to be newly entered, in particular programmed only if a different framing pattern and/or a different frame alignment algorithm is preferred to be used.

Accordingly, predefined frame structures may be used in different application areas by introducing a high flexibility of the framing pattern. Thus, the invention avoids the necessity for defining new frame structures and/or standard framing pattern for specific applications and consequently reduces the costs for adapting the requirements or complaints, in particular the hardware components of a given system to new or improved transmission mechanisms significantly. Since a receiver and/ or transmitter can be used in a more flexible manner, the invention leads to a reduction in costs of manufacturing flexible application specific systems.

Moreover, the processing complexity of different frame structures for data transmission between applications and/or between networks or transmission systems can be considerably reduced.

The invention is preferably adapted to be used for a transparent data transmission of at least one payload signal, in particular by means of an optical transmission channel, with the used basic frame format having an overhead section and a payload section.

Subsequently the invention will be exemplary described in more detail with regard to a preferred embodiment and with reference to be attached drawings in which:

Fig. 1 shows a basic transmission frame format of an optical transmission system, and

Fig. 2 shows a schematic high-level view of a receiver of a system according to the invention.

The invention will be described in the following by way of example with reference to optical transmission systems which use transmission frame structures or pattern based on at least one basic frame or a plurality of combined basic frames.

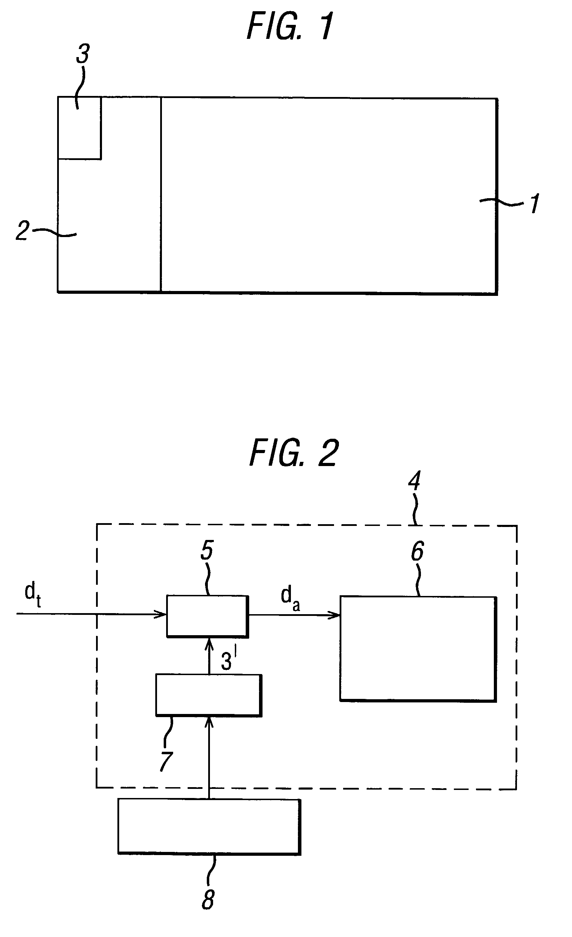

A frame structure of an exemplary basic frame format comprising a payload section 1 and an overhead section 2 added before the payload section 1 can be seen from Fig. 1.

It has to be noted, that an overhead section can be split into several subsections and can be placed at different locations in the frame. For simplicity reasons, in this example the overhead 2 consists of only one part.

At the very beginning of the frame and hence of the overhead section 2 a frame alignment signal or FAS 3 is located. The specific binary pattern of such frame alignment signal 3 contains a plurality of "0" to "1" and "1" to "0" transitions like the SONET/SDH frame alignment signal "#F6F62828". as specified in the referenced standard ITU-T G.783 and/or Telcordia GR-253. Generally, the value and location of such FAS 3 are fixed or predefined by the used standard, wherein a FAS 3 defining or representing the framing pattern used for data transmission can be represented by

$$FAS = [f(b-1), f(b-2), ..., f(0)],$$

wherein b is the sequence length of the frame alignment signal and f is the specific FAS-symbol at a respective position i.

Based on a corresponding synchronization algorithm a transmitter is embedding the FAS 3 and correspondingly the payload data to be transmitted, whereas a respective receiver of the transmission system is detecting the FAS 3 and synchronizes the data stream embedded and transmitted according to he used framing pattern. Subsequent to the successful detection of the boundaries of transmission frames and the aligning of the internal data stream the data processing can be performed in the receiver.

Fig. 2 is showing by means of a schematic high-level view a receiver 4 receiving transmitted data $d_t$ embedded within the frame structure according to a specific transmission framing pattern. The receiver 4 comprises a synchronization device 5, in particular a so-called framer for detecting by means of a specific synchronization algorithm the boundary of the individual transmission frames and to align the embedded data

stream $d_t$ to an aligned data stream $d_a$ which subsequently can be performed by a data processing unit 6 included by the receiver 4.

Furthermore, an external microprocessor (CPU) 8 is connected to the framer 5 with a storage or memory device 7 interconnected therebetween.

By use of the processor 8, a selectable frame alignment signal 3' may be programmed. Thus, for a specific frame alignment algorithm the processor 8 is delivering the alignment signal 3' as desired or necessary to adapt the receiver 4 to the requirements of a framing under high bit error rates BER for example, without the necessity for a new or additional definition of specific frame structures.

The desired frame alignment signal 3' is written into the memory 7 which is connected to the framer 5 such that the framer 5 is able to use the expected frame alignment pattern 3' contained in the internal memory 7 to align the data.

To easily ensure that the framer 5 is able to except or may use the expected frame alignment pattern 3' the framer 5 preferably is realized at least in partial as an integrated circuit or even application specific integrated circuit (ASIC) to provide a very flexible functionality of working independent of any standardized framing pattern in comparison to for example a permanently wired or pre-wired synchronization means.

Consequently such kind of receiver 4 is able to support not only standardized framing pattern and algorithms but also for example proprietary framing pattern and algorithms that are not standardized since the frame alignment is not done based on fixed framing pattern but instead can be done using a flexible framing pattern.

As it will be obvious for a person skilled in the art on the transmitting side a framing arrangement similar to the frame alignment arrangement of the receiver 4 may be used.

That is, the transmitter comprises a programmable framing means such that for an intended synchronization algorithm the data transmission may be operated with different framing pattern according to which the data to be transmitted $d_t$ are flexibly embedded within the used transmission frames.

Consequently, data transmission systems can be adapted in an easy way such that they may be equipped with error correction mechanisms which can deal with higher bit error rates using different frame alignment algorithms since framing alignment pattern can be used flexible and simply adapted to different requirements.

By use of such flexible frame alignment signals the packing density of for example optical transmission systems may be increased and/or given system components such as receivers and/or transmitters can be used even with improved synchronization algorithm since they can work in substantial independent of any standardized framing pattern avoiding in many cases a complex adaptation of hardware. Furthermore non-standardized frame aligning pattern can be used to support non standardized frame alignment algorithms. Thus, a definition of new standardized framing pattern, substantially for each improved data transmission mechanism can be avoided or at least significantly reduced.

By implementation of the inventive approach, for example by use of a respective adapted implementation software the required system components can in principle be produced in a less complex manner and thus more cost effectively.

However it should be mentioned that a person skilled in the art can furthermore see that the description of the invention should be regarded only as an example and modifications can be carried out without departing from the protective scope of the invention as defined by the appending claims. In particular, the invention is not restricted to optical transmission system and/or to the above referenced standards but can be used in substantial with every frame-based data transmission system.

## Claims

1. Method for transmission of data which are embedded in at least one carrier signal having a frame based structure with at least one section defined for embedding synchronization information for detecting a predetermined frame based point of reference **characterized in that** said section is used for a flexible synchronization information (3').

2. Method of claim 1, **characterized by** programming the flexible synchronization information (3').

3. Method of claim 1 or 2, **characterized in that** the synchronization information (3') is adapted to a selectable synchronization algorithm for the synchronization of transmitted data ($d_t$).

4. Method of claim 1, 2 or 3, **characterized by** aligning transmitted data ($d_t$) in dependence of a desired synchronization information(3').

5. Method according to any of the preceding Claims, **characterized in that** a frame based structure for transparent transmission of a payload signal is used.

6. Method according to any of the preceding Claims, **characterized in that** an optical transmission channel is used.

7. Transmission system for the in particular transparent transmission of data, especially for carrying out a method according to one of the preceding claims, with the system adapted for operating with a carrier signal having a frame based structure which comprises at least one section (2) defined for embedding synchronization information (3), **characterized by** means for embedding a selectable synchronization information and/or means (5) for detecting a selectable synchronization information (3) for using flexible framing pattern.

8. Transmission system according to Claim 7, **characterized in that** the means for embedding is comprised by a transmitter.

9. Transmission system according to any of Claims 7 to 8, **characterized by** a transmitter having means for transmitting data in dependence of desired framing pattern.

10. Transmission system according to Claims 7 to 9, **characterized in that** the means for detecting (5) is comprised by a receiver (4).

11. Transmission system according to any of Claims 7 to 10, **characterized by** a receiver (4) having means (5) for aligning transmitted data in dependence of the selectable expected synchronization information (3').

12. Transmission system according to any of Claims 7 to 11, **characterized by** processor means (8) associated to the means for embedding and/or to the means (5) for detecting.

13. Transmission system according to Claim 12, **characterized in that** the processor means (8) is adapted to be programmable.

14. Transmission system according to Claims 12 to 14, **characterized by** memory means (7) interconnected between the processor means (8) and the means for embedding and/or the means (5) for detecting.

15. Transmission system according to any of Claims 7 to 15, **characterized by** a receiver (4) having at least one integrated circuit forming the means (5) for detecting and/or aligning transmitted data in dependence of detected synchronization information (3').

16. Implementation software for carrying out a method according to any of Claims 1 to 6, in particular for use within a transmission system according to any of Claims 7 to 16.

# FIG. 1

# FIG. 2

EP 1 282 248 A1

| European Patent Office | EUROPEAN SEARCH REPORT | Application Number EP 01 30 6494 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 043 856 A (HITACHI LTD) 11 October 2000 (2000-10-11) * abstract * * column 2, line 53 - column 3, line 31 * * column 9, line 6 - column 10, line 19 * * figure 41 * | 1-16 | H04J3/06 |
| X | US 5 493 435 A (CHOPPING GEOFFREY ET AL) 20 February 1996 (1996-02-20) * column 5, line 8 - line 21 * * column 7, line 25 - line 29 * * column 11, line 66 - column 13, line 17 * | 1-16 | |
| A | US 5 896 426 A (DUCAROIR FRANCOIS ET AL) 20 April 1999 (1999-04-20) * abstract * * column 1, line 33 - line 67 * * column 2, line 53 - column 3, line 3 * * column 4, line 29 - line 36 * | 2-6 | |
| A | DE 195 18 205 C (BOSCH GMBH ROBERT) 26 September 1996 (1996-09-26) * abstract * | 1-16 | TECHNICAL FIELDS SEARCHED (Int.Cl.7) H04J H04Q |

The present search report has been drawn up for all claims

| Place of search | Date of completion of the search | Examiner |
|---|---|---|
| THE HAGUE | 15 January 2002 | Bernardini, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

7

## ANNEX TO THE EUROPEAN SEARCH REPORT
## ON EUROPEAN PATENT APPLICATION NO.

EP 01 30 6494

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2002

| Patent document cited in search report | | Publication date | Patent family member(s) | | Publication date |
|---|---|---|---|---|---|
| EP 1043856 | A | 11-10-2000 | EP | 1043856 A2 | 11-10-2000 |
| | | | JP | 2000341233 A | 08-12-2000 |
| US 5493435 | A | 20-02-1996 | EP | 0590901 A2 | 06-04-1994 |
| | | | GB | 2271235 A ,B | 06-04-1994 |
| | | | JP | 6216851 A | 05-08-1994 |
| US 5896426 | A | 20-04-1999 | NONE | | |
| DE 19518205 | C | 26-09-1996 | DE | 19518205 C1 | 26-09-1996 |

EPO FORM P0459

For more details about this annex : see Official Journal of the European Patent Office, No. 12/82